Europäisches Patentamt

European Patent Office

Office européen des brevets

(11) Veröffentlichungsnummer: **0 381 981**
**A1**

## (12) EUROPÄISCHE PATENTANMELDUNG

(21) Anmeldenummer: **90101188.2**

(22) Anmeldetag: **22.01.90**

(51) Int. Cl.⁵: **F16L 25/00, F16L 37/08**

(30) Priorität: **04.02.89 DE 3903356**

(43) Veröffentlichungstag der Anmeldung:
**16.08.90 Patentblatt 90/33**

(84) Benannte Vertragsstaaten:
**CH DE ES FR GB IT LI SE**

(71) Anmelder: **Anton Hummel GmbH .**
**Metallwarenfabrik**
**Mozartstrasse 2 - 5**
**D-7808 Waldkirch(DE)**

(72) Erfinder: **Gehring, Peter**
**Eichhofweg**
**D-7809 Simonswald-Griesbach(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Anschlussarmatur für umfanggerippte Rohre oder Schläuche.**

(57) Eine Anschlußarmatur (1) für umfangsgerippte Rohre oder Schläuche (2), insbesondere für flexible Wellschläuche (2) hat eine das Ende des Wellschlauches (2) in sich aufnehmende Hülse (5), mit welcher der Wellschlauch (2) in Gebrauchsstellung kuppelbar und verbindbar ist. Im Inneren der Hülse (5) ist ein Anschlag (6) mit einer ringförmig umlaufenden Nut (7) vorgesehen, deren der Hülsenachse (A) zugewandte Innenwand (8) geleichzeitig die Außenwand eines Innenstutzens (9) ist. Dessen Stirnseite (10) ist außerdem von einer Innenwand (11) begrenzt, weist gegen das Einsteckende (12) der Hülse (5) hin und hat von diesem Einsteckende (12) einen im Hülseninneren befindlichen Abstand, so daß also der Wellschlauch (2) zunächst über einen Teil der Hülsenlänge unbehindert eingeschoben werden kann. Form und Größe der ring- oder kreisförmigen Stirnseite (10) - eine Kreisform ergibt sich, wenn an der Stirnseite (10) beidseits oder einseits Anfasungen oder Abrundungen vorgesehen sind -des Innenstutzens (9) weichen dabei von der der ringförmigen Wandung des Wellschlauches (2) und insbesondere einem Wellental (3) derart ab, daß zumindest der vorderste Bereich des Innenstutzens 9 oder seine Stirnseite (10) und ein ringförmiger Wandungsteil (13) eines Wellentales (3) in axialer Richtung ineinandersteckbar oder verschiebbar sind, wobei je nach Durchmesser- und Querschnittsverhältnissen das Wandungsteil (13) in das Innere des Stutzens (9) oder auf dessen Außenseite paßt. Somit kann allein schon durch den Innenstutzen und das Ende des Wellschlauches (2) eine geisse Dichtigkeit erzielt werden, die aber mit Hilfe von Dichtungen (20, 20a und 17) je nach Anforderungen gesteigert werden kann.

*Fig. 2*

## Anschlußarmatur für umfangsgerippte Rohre oder Schläuche

Die Erfindung betrifft eine Anschlußarmatur für umfangsgerippte Rohre oder Schläuche, die als Schlauchprofil quer zu ihrer Achsrichtung angeordnete, umlaufende Nuten bzw. Wellen oder dergleichen haben, wobei die Anschlußarmatur eine das Ende des Wellschlauches oder -rohres in sich aufnehmende Hülse hat, an welcher der Wellschlauch bzw. das Wellrohr in Gebrauchsstellung kuppelbar oder festlegbar ist, wobei im Inneren der Hülse ein Anschlag mit einer ringförmig umlaufenden Nut vorgesehen ist, deren der Hülsenachse zugewandte Innenwandung die Außenwandung eines Innenstutzens ist, dessen Stirnseite von einer Innenwand begrenzt ist, gegen das Einsteckende der Hülse gerichtet ist und von diesem einen im Hülseninneren befindlichen Abstand hat.

Eine derartige Anschlußarmatur ist aus der EP-A-0 086 900 bekannt. Die Ringnut verläuft dabei an der Außenseite eines vollständig zylindrischen Innenstutzens und hat selbst zwei parallele Wandungen, Diese Ringnut stützt einen schlauchförmigen Dichtring ab, der über die Stirnseite des Innenstutzens vorsteht. In Gebrauchsstellung drückt die Stirnseite des Wellschlauches gegen diese Dichtung und soll sie in die ringförmige zylindrische Nut pressen, wobei jedoch die Stirnseite des Wellrohres oder des Wellschlauches nicht mit der Stirnseite des Innenstutzens in Berührung kommt. Durch die Rückfederkraft der Dichtung wird der Wellschlauch einer Reaktionskraft ausgesetzt, durch welche er an einem nach innen weisenden Vorsprung eines Kupplungs- oder Halteelementes zu liegen kommt, wenn dieses gegen seine es offenhaltende Federkraft nach innen gedrückt und mit seinem Halterand an der Hülse verrastet ist. Da die Dichtungshülse in ihrem Querschnitt und in ihren Durchmessern von denen der Ringnut abweicht, ergibt sich eine unbestimmte Andrücklinie, das heißt, der Dichtring kann sich unter Umständen entlang seinem Umfang abwechselnd ein- und ausbeulen, so daß die Abdichtung nicht in jedem Falle optimal ist.

Bei einem Staubsaugeranschlußteil zum Kuppeln des Staubsaugerschlauches mit der Saugdüse ist es gemäß DE-U-74 42 132 ebenfalls bekannt, eine Dichtung in eine Ringnut einer Hülse eingreifen zu lassen, gegen welche der Staubsaugerschlauch mit seiner Stirnseite angedrückt wird, wobei er gleichzeitig einen ringförmigen Ansatz dieser Formdichtung übergreift. Es handelt sich dabei im wesentlichen um einen Anschluß anderer Gattung.

Aus der DE-A-32 37 929 ist eine Rohr- oder Schlauchverbindung bekannt, bei welcher im Inneren einer Hülse ebenfalls ein Innenstutzen vorgesehen ist, der eine Ringnut begrenzt, wobei die Außenwandung des Innenstutzens schräg verläuft, so daß die Ringnut einen sich verjüngenden Querschnitt hat. In diesem Falle soll der Wellschlauch auf den Innenstutzen aufgeschoben und dadurch genügend abgedichtet werden. Die Unterbringung eines zusätzlichen Dichtringes ist nicht vorgesehen.

Ebenso ist aus der DE-A-29 06 317 ein Rohr- oder Schlauchverbinder bekannt, bei welchem der eingesteckte, in Form von Windungen angeordnete Wellen und Nuten aufweisende Schlauch ohne Dichtring genügend sicher abgedichtet werden können soll, indem die Hülse an ihrer Innenseite gegen einen Anschlag hin selbst konisch verjüngt ist, aber keinen Innenstutzen aufweist.

In diesen Fällen können Probleme auftreten, weil ein Wellschlauch in seinen beiden Durchmessern häufig nicht derart stark gedehnt oder verringert werden kann, daß er bei zu geringem oder zu großem Außendurchmesser dennoch durch eine nur innere oder nur äußere Konusfläche ausgeweitet bzw. verringert werden kann, bis er einen dichten Berührkontakt mit der inneren oder der äußeren Wandung der Ringnut oder der Hülse hat. Dabei ist zu bedenken, daß ein solcher Wellschlauch in aller Regel nicht elastisch und gut aufweitbar oder gut stauchbar sein soll. Gleichzeitig ist jedoch erwünscht, daß er möglichst leicht in die Hülse einer solchen Anschlußarmatur eingeführt werden kann.

Hinzu kommt in all den vorerwähnten und vorbeschriebenen Fällen, daß es beim Abschneiden eines Wellrohres praktisch nie möglich ist, eine genau ebene und plane Stirnseite zu erhalten, sondern in der Mehrzahl der Fälle ist an der Stirnseite an der letzten Welle oder umlaufenden Nut noch ein Rest des in Einsteckrichtung sich anschließenden Wellentales oder Nutengrundes vorhanden. Dies gilt um so mehr für die Wellschläuche mit gewindeartig angeordneten Wellen und Nuten. Aufgrund des Schneidvorganges können sich dabei in Umfangsrichtung axiale Schlauch-Reststücke unterschiedlicher Breite ergeben, so daß sich keine präzise und für eine gute Abdichtung geeignete Anschlagfläche ergibt. Somit ist bei den vorbekannten Lösungen - selbst wenn sie eine zusätzliche Dichtung aufweisen - nicht sichergestellt, ob die angestrebte Dichtigkeit der Anschlußarmatur erreicht wird. Eine Verwendung der Armatur ohne Dichtring ist unter diesen Umständen häufig nicht einmal gegen Spritzwasser genügend dicht.

Es besteht deshalb die Aufgabe, eine Armatur der eingangs erwähnten Art zu schaffen, mit der schon eine Abdichtung zumindest gegen Spritzwasser auch ohne Dichtring möglich ist, bei Bedarf aber auch Dichtringe zur Verbesserung der Dichtigkeit bis hin zur Druckdichtigkeit untergebracht werden können, ohne daß eine ungenaue Schnittfläche an der Stirnseite des Wellrohres oder Wellschlauches nachgearbeitet werden muß.

Die Lösung dieser scheinbar widersprüchlichen Aufgabe besteht darin, daß wenigstens ein Teil der Innenwandung und wenigstens ein Teil der Außenwandung der Ringnut in axialer Richtung schräg oder bogenförmig oder abgestuft im Sinne einer Querschnittsverminderung der Ringnut zu ihrem Boden hin geformt sind und daß in Gebrauchsstellung das Ende des Wellschlauches und/oder eine Dichtung in die Ringnut eingreift.

Durch diese Maßnahmen ist eine zufriedenstellende Abdichtung schon ohne Dichtring, erst recht aber mit eingelegtem Dichtring möglich. Dabei ist zu beachten, daß die Wellschlauch-Abmessungen am Innen- und am Außendurchmesser je nach Schlauchgröße Maßabweichungen von jeweils plus oder minus 1 mm aufweisen dürfen und deshalb Innen- und Außendurchmesser stark unterschiedlich sein können. Der dadurch notwendige Bereich der Axialverschiebung bis zu einem Kontakt mit der Innen- und/oder Außenwandung der Ringnut wird nun durch diese beidseitig konische Ringnut auf einen Bruchteil der sonst bis zu einer Abdichtung auf einen schlanken Konus oder in einem schlanken Konus notwendigen Axialverschiebung verringert. Entsprechend kürzer kann die gesamte Anschlußarmatur gehalten werden, was unter beengten Platzverhältnissen häufig erwünscht ist. Entweder gelangt je nach Abweichung des Außendurchmessers des Wellschlauches von dem Sollwert die Außenseite oder die Innenseite zuerst mit einer der schrägen Wandungen in Berührkontakt.

Außerdem besteht die Möglichkeit einer doppelseitigen Abdichtung innerhalb dieser beidseitig konisch begrenzten Ringnut. Wenn nämlich ein Wellschlauch mit nicht ganz zutreffendem Innen- oder Außendurchmesser in eine solche Anschlußarmatur einschoben wird, kann sein Innendurchmesser auf dem Innenstutzen aufgeschoben und bei weiterem Einschieben auch etwas aufgeweitet werden, so daß dann auch der Außendurchmesser mit der äußeren Wandung der Ringnut in Kontakt tritt. Umgekehrt kann ein Wellschlauch durch die konische Außenwandung der Ringnut an seinem Außendurchmesser beim Einschieben etwas nach innen gestaucht werden, so daß der eventuell etwas zu große Innendurchmesser an dem ihm aufgrund der schrägen Wandung jedoch entgegenkommenden Innenstutzen ebenfalls zur Anlage kommt. Es wird also durch die erfindungsgemäßen Maßnahmen ermöglicht, daß der Wellschlauch innen und außen in Berührkontakt mit den Wandungen der in der Hülse befindlichen Ringnut gelangt. Dies ergibt eine ganz beachtlich verbesserte Dichtigkeit gegenüber denjenigen Lösungen, bei denen nur eine Umfangsseite eines Wellschlauches Berührkontakt erhält und aufgrund der Unregelmäßigkeiten an der Schlauch- Stirnseite unter Umständen nicht voll zur Anlage kommt.

Dabei wird durch die Erfindung in vorteilhafter Weise ausgenutzt, daß der Wellschlauch in die Hülse einschiebbar ist und dieses Einschieben mehr oder weniger tief gemacht werden kann, je nachdem, in welche Umfangsnut des Wellschlauches ein Haltevorsprung zum Einrasten gebracht wird, so daß entweder so wenig eingeschoben werden kann, daß der Schlauch beispielsweise noch drehbar bleibt, oder - vor allem bei der endgültigen Fixierung so stark und lange eingeschoben werden kann, bis die Doppel-Berührung mit der bestmöglichen Dichtigkeit ohne Dichtring erreicht ist.

Es können also die bei Wellschläuchen auftretenden großen Fertigungstoleranzen problemlos überwunden werden und dennoch eine bestmögliche Dichtigkeit schon ohne Dichtring erreicht werden.

Zusätzlich wird aber auch die Abdichtung beim Einführen eines Dichtringes in die Ringnut verbessert, da auch dieser aufgrund der beidseitig schräg verlaufenden Begrenzungen der Ringnut schnell an zwei verschiedenen Umfängen Berührkontakte erhält, so daß selbst bei etwas geringerer Anpressung eine Druckdichtigkeit erzielt werden kann. Wahlweise kann also mit der erfindungsgemäßen Anschlußarmatur entweder ein Wellschlauch ganz ohne Dichtung oder aber zusammen mit einer Dichtung in die Ringnut hineinragen oder es ist schließlich auch möglich, nur die Dichtung beidseits in der Ringnut zur Anlage zu bringen, während der Wellschlauch mit dem aus der Ringnut vorstehenden Teil der Dichtung abgedichtet wird.

Schließlich sei noch erwähnt, daß durch die erfindungsgemäße Maßnahme in ein und derselben Anschlußarmatur Wellschläuche fixiert werden können, die relativ große gegenseitige Durchmesserabweichungen haben, wobei dann wenigstens ein Durchmesser des Wellschlauches, entweder der Innendurchmesser oder der Außendurchmesser mit einer der Wandungen der Ringnut in Berührkontakt kommt und so schon eine Spritzwasserabdichtung erlaubt. Wird die Anschlußarmatur in dieser Weise für einen grösseren Durchmesserbereich von Wellschläuchen vorgesehen, kann immer noch eine zufriedenstellende Abdichtung insbesondere bei gleichzeitiger Benutzung eines Dichtringes im inneren der Nut erzielt und gleichzeitig die Lagerhaltung verbessert werden, weil entsprechend weniger unterschiedlich bemessene Anschlußarmaturen notwendig sind.

Beispielsweise kann der kleinste Außendurchmesser des Innenstutzens, insbesondere an der Stirnseite, kleiner oder gleich dem Innendurchmesser des Wellschlauches und der Außendurchmesser des Innenstutzens an seinem Ende im Bereich des Nutengrundes größer als der Innendurchmesser des Wellschlauches sein und der kleinste Durchmesser der Außenwandung der Ringnut kann gleich oder größer als der Außendurchmesser des Wellschlauches sein. Dies ergibt die Möglichkeit, einen Wellschlauch kleineren Durchmessers in seiner Montagelage an seinem Innendurchmesser auf den Innenstutzen auflaufen zu lassen und dabei die dichtende Berührung also an der Innenseite des Wellschlauches zu erhalten, während der Wellschlauch an seiner Außenseite freibleibt.

Es ist aber auch möglich, daß der größte Außendurchmesser des Innenstutzens im Bereich des Nutengrundes gleich oder kleiner als der Innendurchmesser des Wellschlauches und der kleinste Durchmesser der Außenwandung der Ringnut im Bereich des Nutengrundes gleich oder kleiner als der Außendurchmesser des Wellschlauches sind. In diesem Falle kann der Wellschlauch innen frei sein und läuft mit seinem Außendurchmesser an der erwähnten Außenwandung auf. Somit kann an ein und derselben Anschlußarmatur entweder ein in seinem Durchmesser kleinerer oder ein in seinem Durchmesser größerer Wellschlauch jeweils einseitig zumindest gegen Spritzwasser abgedichtet werden, da beide Wandungen der Ringnut schräg oder eventuell bogenförmig oder abgestuft verlaufen.

Sowohl der Innendurchmesser als auch der Außendurchmesser des Wellschlauches können an einer der Nutenwandungen auflaufen und in der schon erwähnten Weise in Berührkontakt kommen, wenn der größte Durchmesser der Innenwandung der Nut gleich oder größer als der Innendurchmesser des Wellschlauches und der kleinste Durchmesser der Außenwandung der Ringnut gleich oder kleiner als der Außendurchmesser des Wellschlauches sind. Dies ergibt die schon erwähnte bestmögliche Abdichtung ohne oder auch eventuell mit zusätzlichem Dichtring.

Bei diesen vorerwähnten Möglichkeiten kann je nach axialer Druckkraft auf den Schlauch beim Montieren und je nachdem, in welche Umfangsnut oder in welches Wellental ein Haltevorsprung der Anschlußarmatur zum Einrasten gebracht wird, der Wellschlauch möglichst fest und dicht oder aber weniger fest und dafür drehbar montiert werden, was in manchen Fällen von Vorteil ist. Auch ist es möglich, den Wellschlauch zunächst weniger fest einzuführen und drehbar zu lassen und ihn erst bei der endgültigen Montage so fest einzuschieben, daß durch Überspringen einer oder mehrerer Wellen der Wellschlauch fester und damit dichter eingedrückt wird und bleibt, wobei die beidseitige Konizität der Ringnut schon nach relativ kurzen Axialbewegungen des Schlauches zu diesem Ergebnis führt.

Es ist aber auch möglich, die Anschlußarmatur so zu gestalten, daß der Wellschlauch in der endgültigen Montagestellung drehbar ist, indem der größte Durchmesser der Innenwandung der Nut gleich oder kleiner und der kleinste Durchmesser der Aussenwandung gleich oder größer als der jeweilige Durchmesser des Wellschlauches sind.

Um den Wellschlauch und eine eventuell dessen Ende an der Aussenseite übergreifende Dichtung möglichst gut in die Hülse der Anschlußarmatur einführen zu können, bevor das Ende des Wellschlauches und/oder die dort eventuell vorgesehene Dichtung in die sich an ihren beiden Wänden konisch verjüngende Ringnut eingedrückt werden, ist es zweckmäßig, wenn die Innenwandung der Hülse sich am hinteren Bereich der Schlauchaufnahme, jedoch in Einsteckrichtung vor dem Innenstutzen konisch und/oder stufenförmig oder bogenförmig verjüngt und vorzugsweise zumindest im Bereich des Nutengrundes im Durchmesser gleich oder kleiner als der Außendurchmesser des Wellschlauches an einer Welle ist. Bis zu dem Bereich der Ringnut kann somit der Schlauch und/oder die Dichtung weitgehend ohne Reibung gegen die Innenwandung der Hülse eingeschoben werden.

Eine andere oder zusätzliche Maßnahme zur Erleichterung des Einführens des Schlauches in die Hülse kann darin bestehen, daß die Innenwandung der Anschlußarmatur bzw. ihrer Hülse im Bereich des Innenstutzens gegenüber der Außenwandung der Ringnut in ihrem Umfang über eine Stufe oder stärkere Schräge erweitert ist.

Bei den vorerwähnten Merkmalen und Maßnahmen zur Verbesserung des Sitzes und der Dichtigkeit eines Wellschlauches in der Hülse der erfindungsgemäßen Anschlußarmatur wurde schon angedeutet, daß die Dichtigkeit durch einen Dichtring gesteigert sein kann.

Eine diesbezügliche zweckmäßige Ausgestaltung der Erfindung von ganz erheblicher Bedeutung kann darin bestehen, daß der Innendurchmesser des Innenstutzens gleich oder größer als der der Wellentäler oder Nuten des Wellschlauches ist und die Stirnfläche des Innenstutzens gegen die in Einsteckrichtung vorderste Seitenwand der ersten Welle des Wellschlauches gerichtet ist und daß in der ringförmig an dem Innenstutzen umlaufenden Nut eine durch das Einschieben des Wellschlauches oder -rohres mit Druck beaufschlagbare hülsenförmige Dichtung vorgesehen ist. Diese kann vor dem Einstecken des Wellrohres oder Wellschlauches eventuell gegenüber dem Innenstutzen vorstehen. Wird nun der Wellschlauch eingeführt und dabei ein stirnseitig vorstehender Teil eines Wellentales in das Innere des Innenstutzens geschoben, gelangt eine Flanke oder Stirnseite einer Welle gegen diese Dichtung und auch gegen die Stirnseite des Innenstutzens, wodurch sich nicht nur eine Steckverbindung zwischen Innenstutzen und letztem stirnseitigem Ansatz des Wellschlauches, sondern auch eine gute Abdichtung ergibt, wobei die beidseitig konischen Begrenzungswände der Ringnut mit dem Dichtring eine beidseitige Berührung eingehen können.

Eine demgegenüber abgewandelte, besonders vorteilhafte Ausführungsform der Erfindung kann darin bestehen, daß der Außendurchmesser des Innenstutzens - wie vorstehend in anderem Zusammenhang auch schon erwähnt - zumindest in seinem vorderen, dem Einsteckende der Hülse zugewandten Bereich gleich oder kleiner als der Innendurchmesser des Wellschlauches ist und daß in der ringförmig umlaufenden Nut ein durch das Einschieben und Festlegen des Wellschlauches oder -rohres mit Druck beaufschlagbare hülsenförmige Dichtung vorgesehen ist. Diese Dichtung kann dabei in axialer Richtung unter Umständen relativ kurz sein, so daß sie das Aufstecken des Wellrohres oder Schlauches auf den Innenstutzen zuläßt, wobei sie aber gleichzeitig mit Druck beaufschlagt und demgemäß verformt und gestaucht wird und ihre Dichtwirkung im Zusammenwirken mit der Stirnseite oder Stirnfläche des Wellrohres oder Schlauches in der beidseitig konischen Nut und gegebenenfalls auch am Nutengrund erzeugt.

Dabei kann der in der Ringnut befindliche Dichtungsteil durch den Einschiebedruck stauchbar oder teilweise radial ein- und/oder ausbeulbar und an eine oder beide Nutenwandungen andrückbar sein. Es ist also innerhalb der Ringnut an der Außenseite des Innenstutzens ein gewisser Ausweichraum vorgesehen, der die erwähnten Verformungen der Dichtung unter der Druckwirkung des eingeschobenen Wellschlauches erlaubt. Dadurch lassen sich mehrere Berührungslinien und Berührungsflächen zwischen Dichtung und Hülse bzw. Innenstutzen und auch Schlauch oder Rohr mit einer entsprechend starken Dichtwirkung erzeugen, obwohl die Ringnut und der Innenstutzen aufgrund der beidseitig konisch schräg verlaufenden Wandungen relativ kurz sein kann, so daß auch bei einem relativ kurzen Innenstutzen eine solche Anordnung als druckdichte Verbindung geeignet ist.

Bei einer Ausführungsform, bei welcher das Ende des Wellschlauches auf den Innenstutzen aufschiebbar sein soll, kann die axiale Erstreckung der etwa hülsenförmigen Dichtung gleich oder kürzer als die Tiefe der Ringnut sein. Dadurch wird sichergestellt, daß in jedem Falle auch die Steckverbindung zwischen Wellrohr oder -schlauch und Innenstutzen mit der entsprechenden guten Führung, Zentrierung oder Abdichtung des Wellschlauches zustande kommt und zusätzlich die Dichtwirkung des Dichtringes entsteht. Zur Verbesserung der Dichtwirkung und zur Erleichterung der Montage ist es zweckmäßig, was vorstehend auch bereits kurz angedeutet wurde, daß am Ende des Wellrohres oder -schlauches eine dessen Außenseite umgreifende und insbesondere mit radialem Druck beaufschlagende Hülse aus Dichtungswerkstoff vorgesehen ist, die sich in Gebrauchsstellung unter Druck gegen die vorzugsweise erweiterte Innenwandung der Hülse und/oder die Begrenzungsfläche, insbesondere die Außenwandung der Ringnut anpreßt und sich vorzugsweise in Gebrauchsstellung unter Druck gegen eine gegebenenfalls in der Ringnut befindliche Dichtung anlegt oder einstückig in diese übergeht. Auf diese Weise wird also nicht nur im Inneren der Ringnut, sondern auch noch an der Außenseite des in der Hülse befindlichen Endbereiches des Wellschlauches eine Abdichtung erzielt. Dennoch bleibt der Vorteil erhalten, daß der Schlauch weitgehend unbehindert in die Hülse eingeführt werden kann und innerhalb der Hülse vor Erreichen des Innenstutzens eine gewisse Bewegungsfreiheit zur Anpassung auch an die Kupplungs- und Verriegelungselemente behält.

Zur Verbesserung der Verbindung zwischen dem Ende des Wellschlauches und einer dieses außenseitig umgreifenden Dichtungshülse ist es vorteilhaft, wenn diese das Ende des Wellschlauches umgreifende Dichtungshülse wenigstens einen nach innen gerichteten Vorsprung oder Ringvorsprung zum formschlüssigen Eingreifen in ein Wellental des Wellschlauches hat. Dies ergibt nicht nur beim Montieren in axialer Richtung Formschluß zwischen Wellschlauch und Dichtung, sondern verbessert zusätzlich auch die Dichtwirkung, da dann auch noch in einem Wellental eine Art Dichtring umläuft. Es ergibt sich also Kraftschluß und Formschluß zwischen der Dichtungshülse und dem Wellschlauch.

Zum Festlegen des Wellschlauches oder -rohres in der Hülse der Anschlußarmatur kann in der Hülse eine mit einem nach innen gerichteten, in ein Wellental des Schlauches eingreifenden Vorsprung versehene Federzunge oder dergleichen insbesondere lösbares Kupplungselement vorgesehen sein. Dies ist insbesondere für solche Fälle günstig, in denen eine gelegentliche Demontage erwünscht sein kann. Dabei steht die Federzunge zweckmäßigerweise in Gebrauchsstellung unter Federkraft und muß zum Lösen entgegen dieser Federkraft nach außen aufgebogen werden.

Insbesondere im Zusammenhang mit einem solchen in die Hülse eingearbeiteten Kupplungselement ist eine weitere Ausgestaltung zur Verbesserung des Abweisens von Flüssigkeit dahingehend möglich, daß der Innenstutzen in oder über den Bereich des oder der das Kupplungselement für den Schlauch, vorzugsweise die Zunge, begrenzenden Schlitze ragt. Eventuell bei Spritzwasser in den Nutenbereich eindringende Flüssigkeit kann somit bei senkrechter Montage der Armatur an diesem Innenstutzen ablaufen und an diesen Begrenzungsschlitzen wieder austreten. Wird bei waagerechter Montage darauf geachtet, daß diese die Federzunge begrenzenden Schlitze möglichst an der tiefsten Stelle der Rohranordnung zu liegen kommen, kann das von vorne eindringende Spritzwasser durch diese Schlitze ablaufen, bevor es über die Bohrung des Innenstutzens weiter vordringen kann.

Insgesamt ergibt sich eine Armatur, die je nach Anforderungen in ihrer Dichtigkeit angepaßt werden kann, wobei von vorneherein schon ein Zusammenwirken des Wellschlauches mit dem Innenstutzen und der beidseits konisch gestalteten Ringnut für eine beachtliche Dichtigkeit sorgen kann, da Form und Größe der ring- oder kreisförmigen Stirnseite des Innenstutzens von der ringförmigen Stirnwand des Wellschlauches oder -rohres derart abweicht, daß der vorderste Bereich des Innen stutzens oder seine Stirnseite und ein ringförmiger Wandungsteil eines Wellentales in axialer Richtung ineinandersteckbar oder ineinander verschiebbar sind. Selbst wenn beim Aufschieben des Schlauches auf den Innenstutzen dieser etwas verkantet wäre oder sein Endbereich eine am Umfang umlaufende Dichtungshülse trägt, kann er relativ problemlos gut in die Hülse der Anschlußarmatur eingeschoben werden, bevor die eigentliche Abdichtung mit einem erhöhten axialen Druck auf den Schlauch bewirkt wird. Entsprechend einfach kann die axiale Sicherung oder Kupplung zwischen Wellschlauch und Hülse hergestellt werden, wobei die in Schließstellung federnd gehaltene und entgegen dieser Federkraft in Lösestellung ausschwenkbare Zunge mit einem radial nach innen weisenden, über einen Teil des Schlauchumfanges verlaufenden Vorsprung besonders zweckmäßig ist, da diese beim Einschieben praktisch selbsttätig mit ihrem Vorsprung in ein Wellental einschnappen und einrasten kann.

Nachstehend sind mehrere Ausführungsbeispiele der Erfindung mit ihren ihr als wesentlich zugehörenden Einzelheiten anhand der Zeichnung noch näher beschrieben. Es zeigt in zum Teil schematisierter Darstellung:

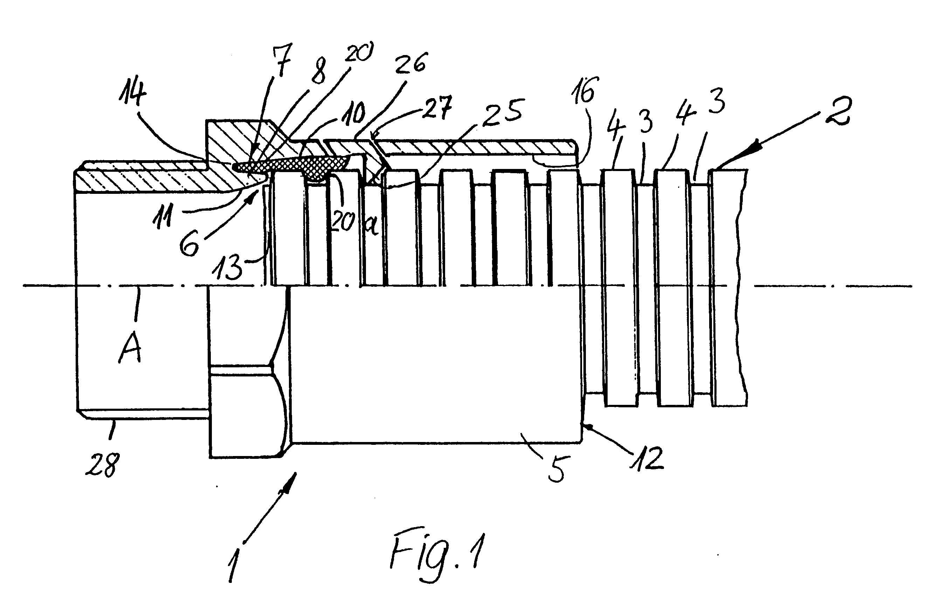

Fig. 1 eine zur Hälfte im Längsschnitt dargestellte Armatur mit in deren Hülse eingreifendem Wellschlauch, wobei der Außendurchmesser der Welle des Wellschlauches kleiner als der Innendurchmesser der Stirnseite und des dieser benachbarten Bereiches eines Innenstutzens ist und in der Ringnut zwischen Innenstutzen und Hülsenwandung eine bis in ein Wellental reichende Dichtung angeordnet ist,

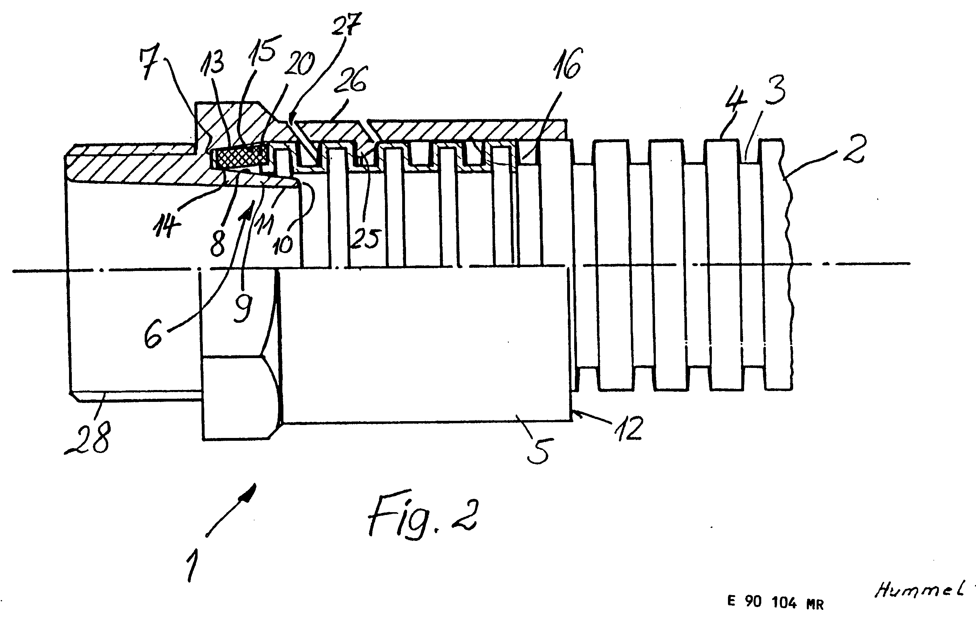

Fig. 2 eine in Fig.1 entsprechende Darstellung, bei welcher der Außendurchmesser des Innenstutzens zumindest in dem seiner Stirnseite nahen Bereich kleiner als der Innendurchmesser eines Wellentales des Wellschlauches ist und der Wellschlauch etwas auf den Innenstutzen aufschiebbar ist und in der Nut zwischen innenstutzen und Hülsenwand ein Dichtring vorgesehen ist,

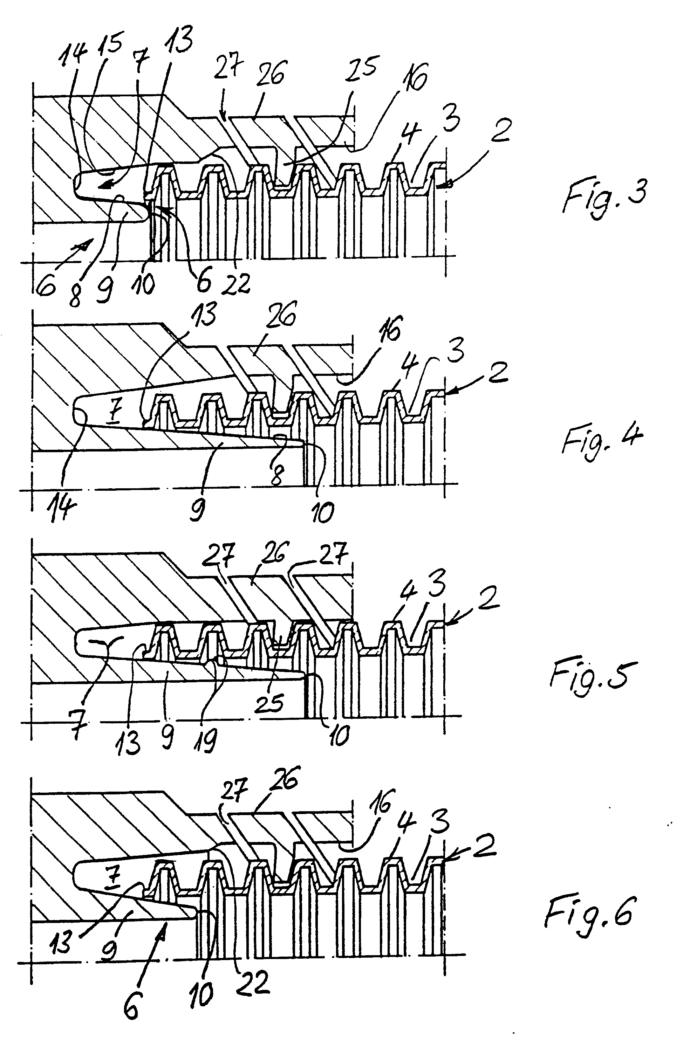

Fig. 3 in vergrößertem Maßstab einen Teillängsschnitt durch den Dichtungs-und Kupplungsbereich einer Armatur gemäß Fig.2, wobei auch die die Nut außen begrenzende Wandung ebenso wie deren Innenwandung konisch schräg verläuft, so daß sich nicht nur das Reststück des stirnseitigen Wellentales, sondern auch wenigstens die der Stirnseite nächste Welle des Wellschlauches in die Nut einklemmt, wobei auf einen Dichtring verzichtet ist,

Fig. 4 eine der Fig. 3 entsprechende Darstellung, bei welcher der Innenstutzen bis in den Schlitzbereich einer zur Kupplung und Festlegung dienenden Federzunge verlängert ist und im Bereich dieser Federzunge ein erweiterter Durchmesser der Hülse vorgesehen ist, der etwa ab der Federzunge konisch zum Nutengrund hin verläuft,

Fig. 5 eine der Fig. 4 weitgehend entsprechende Ausführungsform, bei welcher aber der Innendurchmesser der Hülse weitgehend dem größten Außendurchmesser des Schlauches entspricht und somit der konisch sich verjüngende Bereich der um den Innenstutzen umlaufenden Nut gegen über Fig. 4 verkürzt ist,

Fig. 6 eine etwa Fig. 3 entsprechende Ausführungsform mit erweiterter Innenwandung der Hülse und einer durch eine schräge Stufe oder Ubergangsfläche gebildeten Verbindung zwischen Hülseninnenwand und Nuten-Außenwandung,

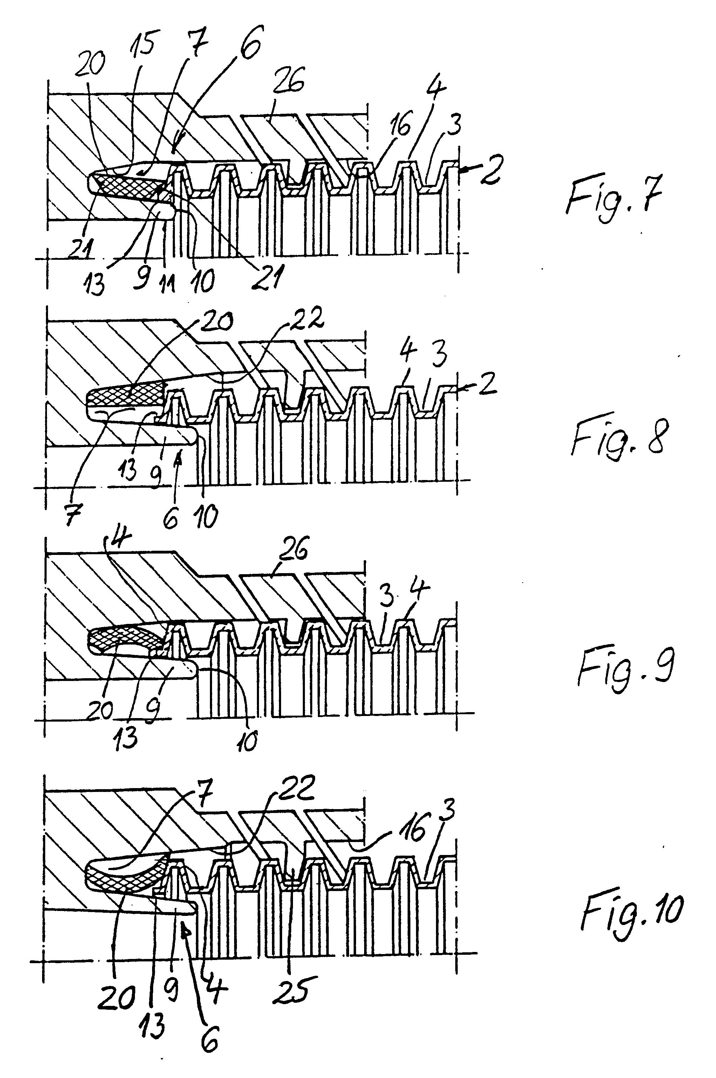

Fig. 7 eine Ausführungsform etwa gemäß Fig. 3 und 5, wobei der Innendurchmesser der Hülse etwa dem Außendurchmesser des Schlauches entspricht und wobei in der Ringnut eine mit dem auf den Innenstutzen aufgestecken Ende des Wellschlauches zusammenwirkende, im Querschnitt trapezförmige Dichtung zusammenwirkt, die an dem Innenstutzen anliegt,

Fig. 8 eine etwa der Fig. 3 entsprechende Auführungsform, bei welcher an der Außenwand der Ringnut eine mit der Stirnseite des auf den Innenstutzen aufgesteckten Wellschlauches zusammenwirkender Dichtring anliegt,

Fig. 9 eine etwa der Ausführungsform nach Fig. 7 entsprechende Ausführungsform, bei welcher der Innenstutzen etwa die Form gemäß Fig. 8 hat und die in der Nut befindliche Dichtung durch den eingedrückten Wellschlauch nach außen aufgebaucht ist,

Fig. 10 eine Ausführungsform, bei welcher der in der Ringnut befindliche Dichtring nach innen eingebeult ist.

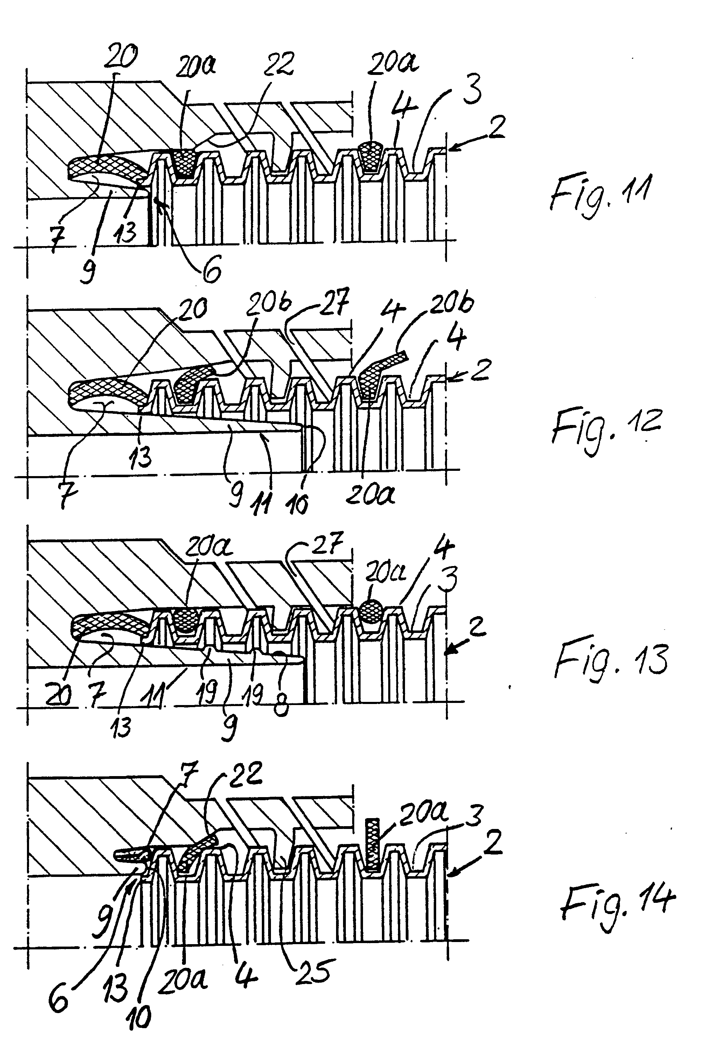

Fig. 11 eine Ausführungsform etwa gemäß Fig. 10 mit einem in der Ringnut befindlichen, nach außen gebauchten hülsenartigen Dichtring sowie in Wellentäler des Wellschlauches eingefügten Spezialdichtringen,

Fig. 12 eine etwa Fig. 11 entsprechende Ausführungsform, bei welcher die ringförmige, im Querschnitt konische Nut bis zu einem zungenförmigen Kupplungselement reicht und außer einer stirnseitig an dem Wellschlauch befindlichen ausgebeulten Dichtung in Wellentälern Dichtungen eingreifen, die überstehende, an der Hülseninnenseite oder der Nutenwand anliegende Dichtlippen haben,

Fig. 13 eine etwa Fig. 11 entsprechende Ausführungsform, bei welcher in Wellentälern oder Ringnuten des Wellschlauches O-Ringe eingefügt sind, deren Innendurchmesser größer als der Außendurchmesser des Wellentales und deren Außendurchmesser vor der Montage größer als der Außendurchmesser der Welle des Wellschlauches ist.

Fig. 14 eine Ausführungsform, bei welcher ein extrem kurzer Innenstutzen von einem stirnseitigen Rest eines Wellentales innen untergriffen ist und in einem benachbarten Wellental eine ringförmige Flachdichtung angeordnet ist, die durch eine Querschnittsverengung der Hülse lippenartig umgelegt und in Dichtungskontakt mit der wiederum benachbarten Welle gebracht ist,

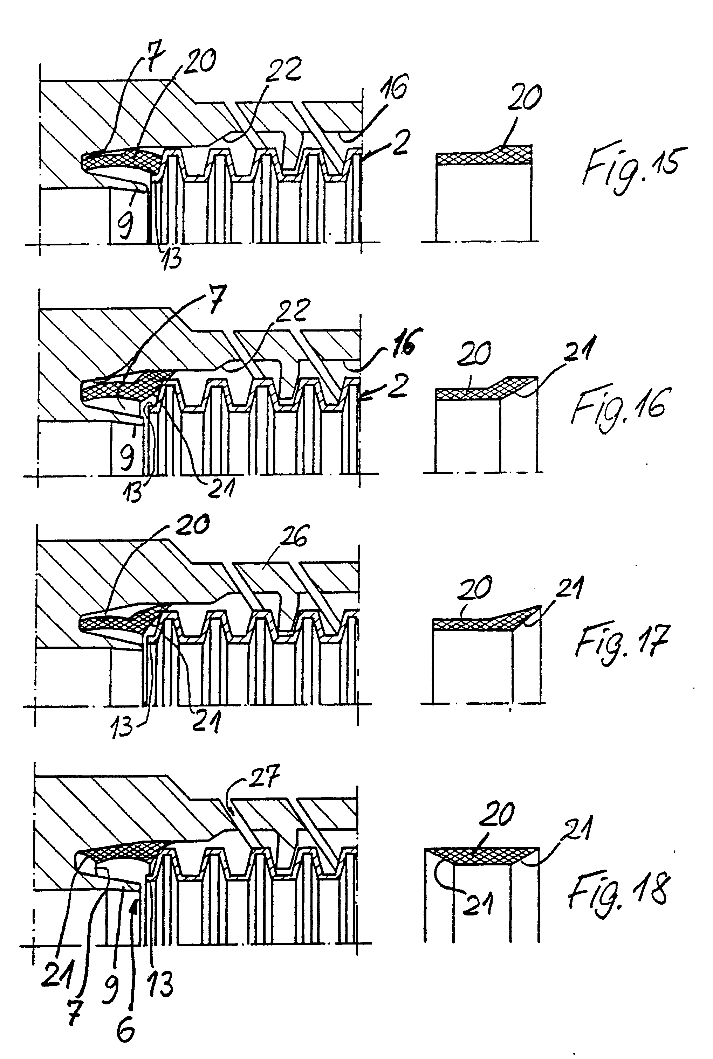

Fig. 15 eine etwa Fig. 3 entsprechende Ausführungsform, bei welcher in die Nut eine etwa hülsenförmige Spezialdichtung eingreift, deren axiale Länge größer als der Innenstutzen ist und die in die Nut stauchbar und ausbeulbar ist, wobei der dem Nutengrund nahe Bereich der Dichtung eine geringere Wandstärke als der benachbarte Bereich hat, wobei die unverformte Dichtung zusätzlich dargestellt ist,

Fig. 16 eine etwa Fig. 15 entsprechende Ausführungsform, bei welcher der mit dem Wellschlauch-Ende zusammenwirkende Teil der Spezialdichtung eine innenseitige Schräge und Querschnittserweiterung zum Zusammenwirken mit der ersten Welle des Wellschlauches hat, wobei wiederum die unverformte Dichtung zusätzlich dargestellt ist,

Fig. 17 eine der Fig. 16 entsprechende Ausführungsform mit abgewandeltem Profil der Dichtung insbesondere in ihrem Erweiteurngsbereich,

Fig. 18 eine den Figuren 15 bis 17 entsprechende Ausführungsform mit einer im Querschnitt trapezförmigen Dichtung, die in Gebrauchsstellung mit ihrer Außenseite an der Außenwand der Nut anliegt und zentriert ist,

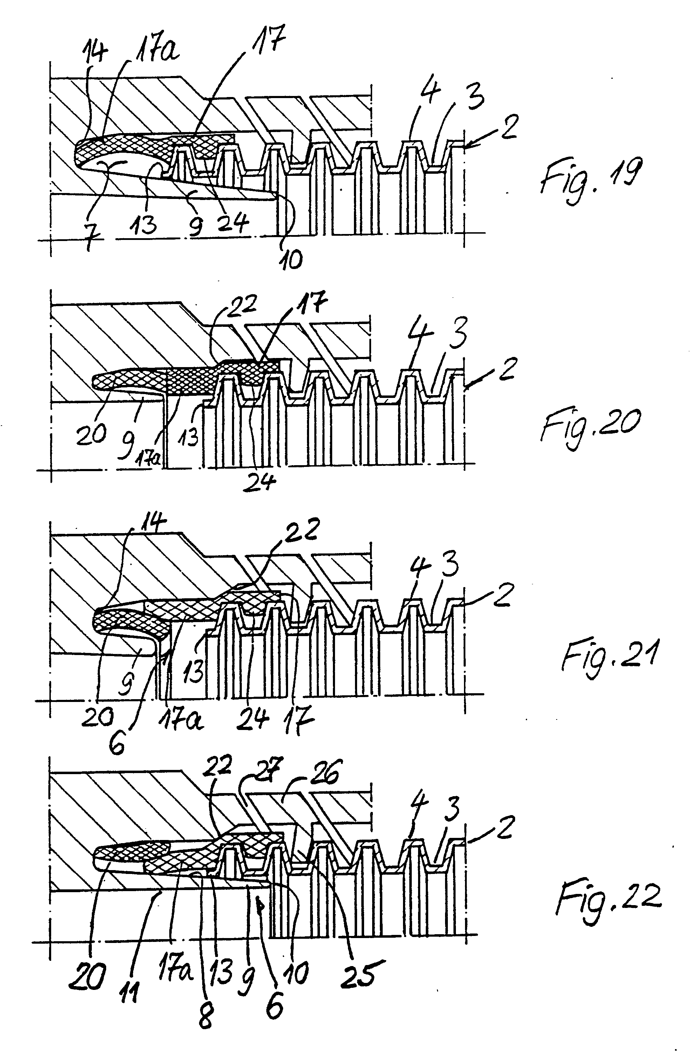

Fig. 19 eine Ausführungsform, bei welcher der konische Innenstutzen bis in den Bereich des ihm näherliegenden Schlitzes einer federnden Kupplungszunge reicht und die Hülse einen gegenüber dem Schlauchdurchmesser erweiterten Innendurchmesser hat, in welchen ein auf das Schlauchende passendes Dichtungselement einschiebbar ist, welches über die Stirnseite des Schlauches in die Ringnut übersteht und in dieser stauchbar ist,

Fig. 20 eine der Fig. 19 entsprechende Ausführungsform, bei welcher der Innenstutzen verkürzt ist und die außen an dem Wellrohr befindliche schlauchförmige Dichtung übersteht und mit einem zweiten Dichtelement in der Ringnut stirnseitig Dichtkontakt hat,

Fig. 21 eine etwa der Fig. 20 entsprechende Ausführungsform, bei welcher die an dem Wellrohr-Ende überstehende Dichtung das in der Ringnut befindliche zweite Dichtelement außenseitig überlappt,

Fig. 22 eine der Fig. 19 bis 21 entsprechende Ausführungsform, bei welcher das über das Schlauchende überstehende Dichtungselement die in der Ringnut befindliche weitere Dichtung innenseitig überlappt,

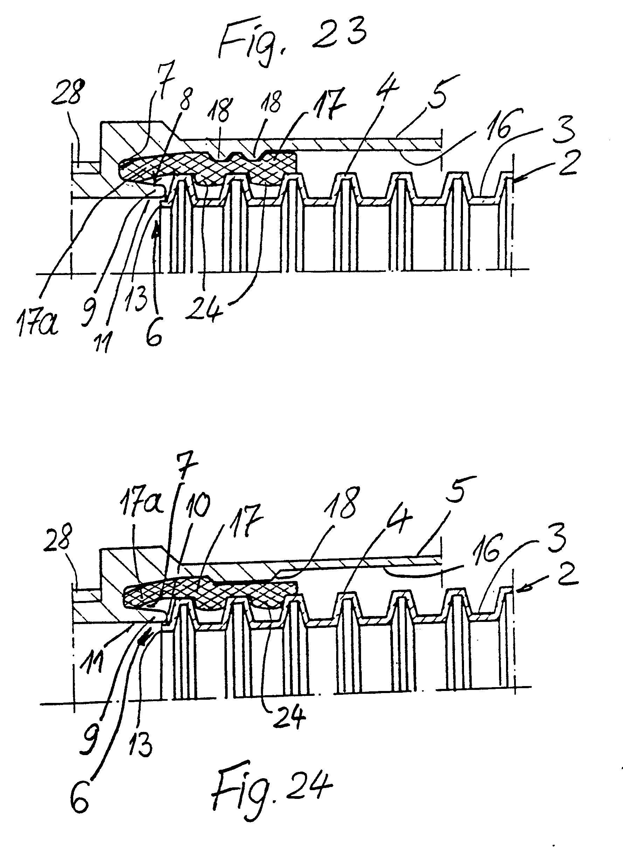

Fig. 23 ein Ausführungsbeispiel, bei welcher ein an der Außenseite des Schlauches befindliches überstehendes Dichtungselement in die Ringnut, ein stirnseitig überstehender Rest eines Wellentales aber in den Innenstutzen eingreift, wobei an der Innenwand der Hülse zwei ringförmige Vorsprünge zum radialen Verklemmen und Verpressen des Dichtungselementes vorgesehen sind,

Fig. 24 eine der Fig. 23 entsprechende Ausführungsform, bei welcher an der Innenseite der Hülse ein einziger ringförmiger breiter Vorsprung vorgesehen ist,

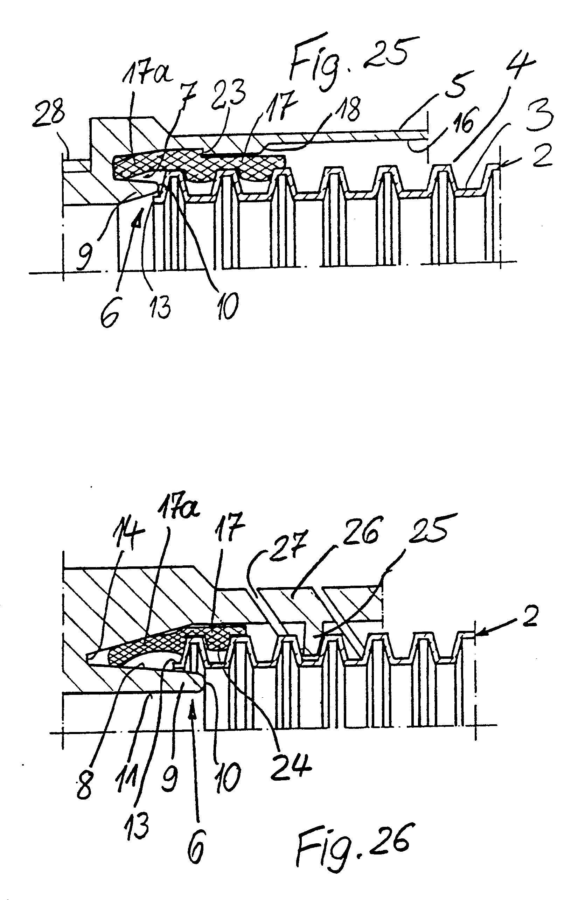

Fig. 25 eine Ausführungsbeispiel gemäß Fig. 24, bei welchem der ringförmige Vorsprung an seinem der Nut zugewandten Rand eine Hinterschneidung aufweist und der von einem Rest eines Wellentales an der Innenseite übergriffene Innenstutzen sich von seiner Stirnseite zu seinem dem Einsteckende der Hülse abgewandten Ende konisch erweitert,

Fig. 26 ein Ausführungsbeispiel, bei welchem sich die Ring-Nut zwischen Innenstutzen und Hülsenwandung konisch stark verjüngt und der auf der Außenseite des Schlauchendes formschlüssig aufsitzende Dichtungskörper in diese Nut ragt und an beiden Nutenwandungen angedrückt sowie außerdem ausgebeult ist, sowie

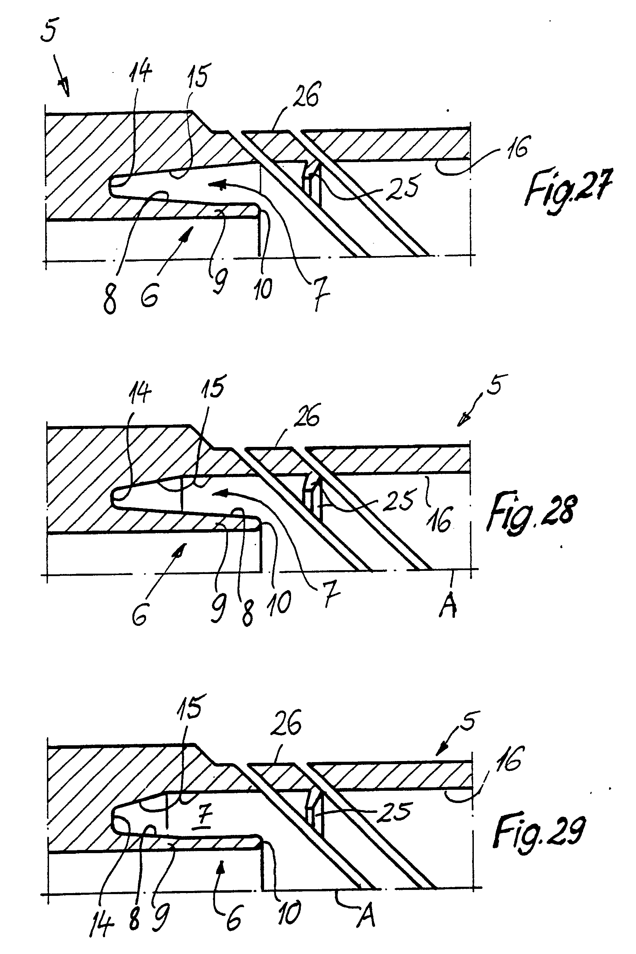

Fig. 27 bis 29 Abwandlungen der Innenkontur der Ringnut beziehungsweise des Innenstutzens.

Eine in allen Ausführungsbeispielen jeweils trotz unterschiedlicher Ausgestaltung mit 1 bezeichnete Anschlußarmatur oder Armatur 1 dient zum Befestigen oder Anschliessen von umfangsgerippten Rohren oder Schläuchen, insbesondere für flexible Wellschläuche 2, die als Schlauchprofil quer zu ihrer Axialrichtung angeordnete umlaufende Nuten oder Wellentäler 3 bzw. Wellen 4 haben.

Die Armatur 1 hat dazu eine das Ende des Wellschlauches oder -rohres, im folgenden jeweils kurz Wellschlauch oder Schlauch 2 genannt, in sich aufnehmende Hülse 5, an welcher der Wellschlauch 2 in Gebrauchsstellung kuppelbar oder festlegbar ist. Im Inneren der Hülse 5 ist ein im ganzen mit 6 bezeichneter Anschlag mit einer ringförmigen Nut 7 vorgesehen, deren der Hülsenachse A zugewandte Innenwandung 8 die Außenwand eines Innenstutzens 9 ist, dessen Stirnseite 10 von einer Innenwand 11 sowie der vorerwähnten Außenwand 8 begrenzt ist, gegen das Einsteckende 12 der Hülse 5 gerichtet ist und von diesem Einsteckende 12 einen im Hülseninneren befindlichen erheblichen Abstand hat.

Damit am vordersten Ende des Schlauches 2 neben der letzten Welle befindliche Teile 13 eines Wellentales 3, die beim Abschneiden des Schlauches auf die gewünschte Länge übrig bleiben und in der Regel eine sehr unregelmäßige Kontur haben, die Abdichtung im Bereich des Anschlages 6 nicht stören, weicht Form und Größe, insbesondere Umfang und Durchmesser, der ring- oder kreisförmigen Stirnseite 10 des Innenstutzens 9 von der ringförmigen Wandung des Wellschlauches 2 in einem Wellental 3 bzw. an einem Wellentalrest 13 derart ab, daß zumindest der vorderste Bereich des Innenstutzens 9 oder seine Stirnseite 10 und der ringförmige Wandungsteil 13 eines Wellentales in axialer Richtung ineinandersteckbar oder verschiebbar sind.

Dabei gibt es gemäß den Ausführungsbeispielen in Fig. 1, 14 und 23 bis 25 die Möglichkeit, daß der Innendurchmesser des Innenstutzens 9 etwa gleich oder größer als der Fußgrunddurchmesser bzw. Außendurchmesser eines Wellentales 3 bzw. des Wellentalstückes 13 ist, so daß dieses gemäß den genannten Ausführungsbeispielen etwas in das Innere des Stutzens 9 eingreifen kann.

Bei den übrigen Ausführungsbeispielen ist hingegen vorgesehen, daß der Außendurchmesser des Innenstutzens 9 etwa gleich oder kleiner als der Innendurchmesser des Wellschlauches 2, also seiner Wellen 3 und dabei auch des Wellenstückes 13 ist, so daß in diesen Fällen das Ende des Wellschlauches auf die Außenseite des Innenstutzens 9 paßt, also etwas in die Nut 7 eingeschoben werden kann.

In beiden Fällen ergibt sich durch diese Maßnahmen schon eine gewisse Dichtigkeit, weil der unregelmäßig geformte Rand des vordersten Teiles 13 bei der Berührung mit dem Anschlag 6 keine Rolle spielt, sondern regelmäßig geformte Teile aneinander zu liegen kommen, im ersten Fall beispielsweise die vorderste Seitenfläche der vordersten Welle 4 an der Stirnseite 10 des Innenstutzens 9, in anderen Fällen die Innenseite des Schlauches 2 an der Außenseite oder Außenwand 8 des Innenstutzens 9.

In allen Ausführungsbeispielen hat die umlaufende Ringnut 7 einen sich zu ihrem Boden 14 verengenden Querschnitt. Somit wird ein in die Nut 7 eingreifender Wellschlauch je nach axialer Eindrückkraft mehr und mehr verklemmt und somit auch bereits ohne irgend eine zusätzliche Dichtung mehr und mehr abgedichtet.

Dabei zeigen all die verschiedenen Ausführungsbeispiele, daß sowohl wenigstens ein Teil der Innenwandung 8 als auch wenigstens ein Teil der Außenwandung 15 der Ringnut 7 in axialer Richtung schräg - gegebenenfalls auch bogenförmig oder abgestuft - im Sinne einer Querschnittsverminderung der Nut 7 zu ihrem Boden 14 hin geformt ist.

Während beim Ausführungsbeispiel nach Fig. 1, 14 und 23 bis 25 die Innenseite des Innenstutzens 9 über den vordersten Teil 13 des Wellschlauches 2 paßt, zeigen die übrigen Ausführungsbeispiele, daß der Außendurchmesser des Innenstutzens 9 an der Stirnseite 10 kleiner und an seinem Ende im Bereich des Nutengrundes 14 größer als der Innendurchmesser des Wellschlauches 2 und insbesondere seiner Wellentäler 3 sein kann, so daß der Wellschlauch mehr und mehr auf den Innenstutzen 9 aufgeschoben und dabei mehr und mehr an seinem Innendurchmesser verklemmt und abgedichtet werden kann.

Gemäß den Figuren 3, 4, 6, 8, 10, 11, 12, 14 bis 18, 21, 22 und 26 kann sich die Innenwandung 16 der Hülse 5 im hinteren Bereich der Schlauchaufnahme, jedoch - in Einsteckrichtung - vor dem Innenstutzen 9 konisch oder stufenförmig verjüngen und zumindest im Bereich des Nutengrundes 14, gegebenenfalls auch schon am Eintritt in die Nut 7, im Durchmesser gleich oder kleiner als der Außendurchmesser des Wellschlauches 2 an einer Welle 4 sein, so daß der Wellschlauch 2 zunächst unbehindert eingeschoben, dann aber im Inneren der Nut 7 innen oder auch außen eingeklemmt und bereits dadurch abgedichtet wird. Bis nahe vor dem Bereich des Innenstutzens 9 ist dabei die Innenwandung 16 der Anschlußarmatur 1 bzw. ihrer Hülse 5 in ihrem Umfang erweitert, so daß das Einschieben des Wellschlauches sehr leicht geht und vor allem auch Platz dafür ist, eine an der Außenseite des Wellschlauches befindliche Dichtungshülse 17, die nachfolgend noch beschrieben werden wird, mit einzuschieben.

Fig. 23 bis 25 zeigen, daß die Innenwandung 16 der Hülse 5 im Nachbarbereich der Stirnseite 10 des Innenstutzens 9, also in Einsteckrichtung des Wellschlauches 2 vor dieser Stirnseite 10 einen (Fig. 24 und 26) oder mehrere (Fig. 23) in Umfangsrichtung verlaufende Vorsprünge 18 aufweisen kann, welche zusammen mit der in Einsteckrichtung dahinter liegenden Ringnut 7 einen umlaufenden Hohlraum bilden, wobei der Außendurchmesser dieses Hohlraumes vom Innendurchmesser der Hülse 5 abweichen kann. Diese Vorsprünge 18 können wiederum mit einer schon erwähnten Dichtungshülse 17 zusammen vorteilhaft sein und zu einer zusätzlichen Verklemmung und Fixierung des Wellschlauches 2 und seiner Dichtungshülse 17 und zur Festlegung dieser Einheit in der Hülse 5 dienen.

Die Einstecktiefe des Innenstutzens 9 in die vordere Öffnung oder Mündung des Schlauches 2 kann je nach axialer Länge des Innenstutzens 9 und je nach Eindringtiefe des Schlauches 2 in die Hülse 5 unterschiedlich sein. Für eine gute Abdichtung ist es zweckmäßig, wenn die Stirnseite 10 des Innenstutzens 9 mit dessen vorderstem Bereich zumindest bis zur ersten Profilnut 3 in den Wellschlauch 2 hineinragt, wie man es z.B. in Fig. 2, in erhöhtem Maße in Fig. 4 und 5 oder auch in Fig. 6 sowie außerdem in den Figuren 8 bis 10, 12, 13, 19 und 22 erkennt. Fig. 13 zeigt, daß dabei der Innenstutzen 9 an seiner äußeren Mantelfläche seiner Außenwand 8 einen oder mehrere, in diesem Falle zwei ringförmige Abtropfwülste 19 aufweisen kann, die evtl. an der Außenseite des Schlauches 2 in die Hülse 5 eingedrungenes Wasser wieder nach unten in die Hülse 5 abtropfen lassen, bevor es ins Innere des Wellschlauches gelangen kann.

Vorstehend wurde schon erwähnt, daß der Innenstutzen 9 unterschiedlich lang ausgebildet sein kann. Dabei kann er eine solche Länge haben, daß seine Stirnseite 10 über den sich konisch oder abgestuft verjüngenden Teil der Innenwandung 16 der Hülse 5 in deren erweiterten Bereich hinausragt, wie es beispielsweise in Fig. 4, 12 oder insbesondere 22 gezeigt ist. Dadurch kann das Einführen eines Wellschlauches mit einer an seiner Außenseite befindlichen Dichtungshülse 17 erleichtert werden, weil sowohl die überstehende Dichtung 17 als auch der Wellschlauch selber innenseitig geführt sind, wenn die Verengung in die Nut 7 beim weiteren Einschieben wirksam wird.

Im folgenden sind Ausführungsbeispiele erläutert, bei denen neben oder statt der Abdichtung durch die besondere Formgebung der Hülse 5 und ihrer Innenwandung 16, der Ringnut 7 sowie des Innenstutzens 9 auch noch ein oder mehrere Dichtungen 17, 20 oder 21 vorgesehen sind. Fig. 1 zeigt beispielsweise eine Anordnung, bei welcher der Innendurchmesser des Innenstutzens 9 gleich oder größer als der des Wellentales 3 des Wellschlauches 2 ist und die Stirnfläche 10 des Innenstutzens 9 gegen die in Einsteckrichtung vorderste Seitenwand der ersten Welle 4 des Wellschlauches 2 gerichtet ist. In der ringförmig umlaufenden Nut 7 ist dabei eine durch das Einschieben des Wellschlauches 2 mit Druck beaufschlagbare hülsenförmige Dichtung 20 vorgesehen. Da in das vorderste Wellental ein einstückiger Dichtring 20a der Dichtung 20 eingreift, ergibt sich eine gute Kraftübertragung beim Einschieben und eine gute Abdichtung in Gebrauchsstellung.

Die Ausführungsbeispiele gemäß den Figuren 2, 7 bis 13 sowie auch 15 bis 18 zeigen Lösungen, bei denen der Außendurchmesser des Innenstutzens 9 zumindest in seinem vordersten Bereich gleich oder kleiner als der Innendurchmesser des Wellschlauches 2 ist und in der ringförmig umlaufenden Nut 7 eine durch das Einschieben und Festlegen des Wellschlauches 2 mit Druck beaufschlagbare hülsenförmige Dichtung 20 vorgesehen ist, die gemäß den genannten Ausführungsbeispielen unterschiedliche Querschnittsformen haben kann. Dabei ist in einigen Fällen, in denen eine Dichtung 20 benutzt wird, der Querschnitt der Ringnut 7 größer als der Querschnitt der von ihr umschlossenen Dichtung 20 und der in der Ringnut 7 befindliche Dichtungsteil - sei es die erwähnte Dichtung 20, sei es ein vorspringender Teil 17a der noch zu beschreibenden Dichtung 17 - ist durch den Einschiebedruck teilweise radial ein- und/oder ausbeulbar und mit einem Teilbereich seiner Innen- oder Außenwandung an eine oder beide Nutenwandungen andrückbar. Während Fig.10 eine nach innen eingebeulte Dichtung 20 zeigt, erkennt man in Fig.9 eine ausgebeulte Dichtung 20, wobei diese Dichtung 20 in beiden Fällen auch an einer der Nutenwände zur Anlage kommt und somit die Dichtwirkung weiter verbessert wird. In anderen Fällen ist die Dichtung 17 oder 20 so in die Ringnut 7 gedrückt, daß sie an beiden schrägen Nutenwandungen 15 und 8 gleichzeitig zur Anlage kommt (vgl. z.B. Fig. 1, 2,14, 20, 23 und 26).

In den Ausführungsbeispielen gemäß den Figuren 2, 7 bis 10, 12 und 13 ist dabei die axiale Erstreckung der hülsenförmigen Dichtung 20 gleich oder kürzer als die Tiefe der Ringnut 7. Der Wellschlauch 2 tritt also in die Ringnut 7 ein, wenn die Dichtung beaufschlagt ist.

Um dabei eine evtl. die Dichtwirkung verschlechternde Berührung zwischen dem Wellentalstück 13 an der Stirnseite des Schlauches 2 und der Dichtung 20 zu verhindern, könnte entweder die Dichtung 20 auf einem genügend großen Durchmesser liegen (Fig. 1, 2, 8, 15 bis 18) oder es kann eine oder beide Stirnseiten der hülsenförmigen Dichtung 20 eine nach innen verlaufende Abschrägung 21 oder Abstufung zur Aufnahme dieses vorstehenden Teiles 13 eines Wellentales 3 des Schlauches 2 haben. Fig. 7 zeigt ein Beispiel, bei welchem der Querschnitt des in der Ringnut 7 befindlichen Dichtungsteiles 20 etwa trapezförmig ist, wobei die äußere axiale Abmessung größer als die innere axiale Abmessung ist und wobei in diesem Falle beide Stirnseiten schräg verlaufen, so daß der Dichtring, der an der Außenwand 8 des Innenstutzens 9 anliegt, in beliebiger Orientierung eingeschoben werden kann und trotzdem die Schräge jeweils das vorstehende Teil 13 übergreift. Die Stauchung dieses Dichtringes 20 gemäß Fig. 7 verdeutlicht Fig. 9. Da dieser Dichtring nur an seiner Außenseite genügend Platz für eine Ausbeulung hat, verformt er sich auch in dieser Richtung, wobei sich die dem Schlauch zugewandte Schrägfläche auf das Stück 13 auflegen kann.

Die Einbeulung der in Fig. 8 dargestellten, in Ausgangsstellung an der Außenwandung der Nut 7 anliegenden Dichtung 20 verdeutlicht Fig. 10.

Fig. 18 zeigt ein Beispiel einer Dichtung 20 mit trapezförmigem Querschnitt, die auch an der Außenseite 15 der Nut 7 anliegt, aufgrund der Schrägflächen aber an einer Einbeulung nach innen gehindert wird und durch den axialen Druck des Schlauches 2 in sich verformt wird, wie es der Vergleich der in Gebrauchsstellung befindlichen Dichtung 20 mit der daneben dargestellten unverformten Dichtung 20 zeigt.

Die Figuren 15 bis 17 zeigen Ausführungsformen, bei denen die hülsenförmige Dichtung 20 bezüglich ihres Wandungsquerschnittes von innen und/oder von außen über einen Teil, beispielsweise gemäß Fig. 15 etwa über die Hälfte ihrer axialen Erstreckung, gemäß Fig. 17 auch über mehr als die Hälfte der axialen Erstreckung, zur besseren Stauchbarkeit vermindert ist. Durch diese Schwächung der Dichtung 20 kann dieser Bereich besonders leicht unter dem axialen Druck des Schlauches 2 aus- oder auch eingebeult werden. Die hülsenförmige Dichtung 20 gemäß den Beispielen in Fig. 16 bis 18 weist dabei in ihrer dem Einsteckende 12 der Hülse 5 zugewandten Stirnseite eine nach innen verlaufende Schräge 21 auf, welche in Gebrauchsstellung mit ihrem größten Durchmesser den Außendurchmesser des Wellschlauches übergreift. Somit ergibt sich eine gute Zusammenwirkung zwischen der vordersten Welle 4 und dieser Schrägfläche 21 der Dichtung 20.

Es wurde schon erwähnt, daß am Ende des Wellrohres oder Schlauches 2 eine dessen Außenseite umgreifende und insbesondere mit radialem Druck beaufschlagende Hülse 17 aus Dichtungswerkstoff vorgesehen sein kann, die sich in Gebrauchsstellung unter Druck gegen die vorzugsweise erweiterte Innenwandung 16 der Hülse 5 und/oder die Begrenzungsflächen der Ringnut 7 und/oder der in Umfangsrichtung verlaufenden Vorsprünge 18 anpreßt. Dabei kann sie vor allem auch mit dem schrägen Übergang 22 an der Innenseite der Hülse 5 von deren größerem Innendurchmesser zu dem kleineren Durchmesser der Nut 7 zusammenwirken, wie es beispielsweise Fig. 20 bis 22 verdeutlicht.

Dabei kann sich diese Dichtung 17 in Gebrauchsstellung unter Druck gegen eine in der Ringnut 7 befindliche Dichtung 20 anlegen, wie es die Figuren 20 bis 22 zeigen, oder sie kann einstückig in eine solche Dichtung 17a übergehen, wie es Fig. 19 oder auch 23 bis 26 zeigt. Dabei kann eine solche Spezialdichtung 17 je nach Anforderungen an die Druckdichtigkeit gewählt werden. Vor allen das Zusammenwirken mit dem schrägen Übergang 22 ergibt eine gute Dichtwirkung, weil an dieser Stelle einerseits die Außenkante der Welle 4 und andererseits die Übergangskante von dieser Übergangsfläche 22 in den Bereich der Nut 7 wie eine Art Anschlag zusammenwirken und den zwischen ihnen befindlichen Dichtungswerkstoff beidseits beaufschlagen.

In Fig. 25 ist eine im Zusammenhang mit dieser Spezialdichtung 17 zweckmäßige Ausgestaltung vorgesehen, wonach nämlich der an der Innenseite der Hülse 5 vorgesehene Klemmvorsprung 18 für die Außendichtung 17 des Wellschlauches 2 auf seiner dem Einsteckende 12 der Hülse 5 abgewandten Seite eine steile oder sogar hinterschnittene Begrenzung 23 aufweist, die in Gebrauchsstellung in die über diese Kante ragende Dichtungshülse 17 eingedrückt ist. Daraus ergibt sich nicht nur eine gute Abdichtung, sondern auch eine axiale Festlegung des Wellschlauches 2, da die Dichtung 17 gleichzeitig auch in Wellentäler 3 eingreift und somit einem axialen Zurückziehen des Schlauches 2 einen erheblichen Widerstand leistet, der allerdings auch an den nicht mit einer solchen hinterschnittenen Begrenzung 23 versehenen Vorsprüngen 18, wenn auch in schwächerem Maße, auftritt.

Gemäß den Figuren 21 und 22 kann die auf dem Schlauch-oder Rohrende sitzende und daran überstehende Dichtung 17 mit ihrem überstehenden Bereich 17a die Außen- oder Innenseite der in der Nut 7 befindlichen Dichtung 20 überlappen und sie kann dabei gegebenenfalls in der Richtung konisch sein, daß sich die Wölbung der verformten, in der Nut 7 befindlichen Dichtung 20 an die Schrägung dieses Konus anlegt. Während bei Fig. 21 der überstehende Bereich 17a einen Innenkonus hat und die Dichtung 20 nach außen gewölbt ist und sich somit an diesen Innenkonus anlegt, ist bei der Lösung nach Fig. 22 an dem überstehenden Bereich 17a ein Außenkonus vorgesehen, an welchen sich ein Teil der nach innen eingebeulten und gestauchten Dichtung 20 anlegt. Fig. 20 zeigt hingegen eine Lösung, bei welcher der überstehende Bereich 17a mit seiner Stirnseite gegen die Stirnseite der Dichtung 20 drückt.

Bei einstückiger Dichtungshülse 17 kann ihr über das Ende des Wellrohres oder Schlauches 2 vorstehender Bereich 17a gemäß Fig. 19 oder 23 bis 26 in der Ringnut 7 ein- oder ausbeulbar sein, wobei die Stirnseite des Wellrohres oder Schlauches 2 in einzelnen Fällen - Fig. 19, 22 und 26 -am Ende der Innenwandung 8 der Nut 7 anschlägt. Aber auch in den Figuren 23 und 24 ergibt sich durch den Berührkontakt mit der Stirnseite 10 des Innenstutzens 9 ein Anschlag des stirnseitigen Endes des Wellschlauches 2 am äußersten Ende der Innenwandung 8 der Nut 7.

Ist das Ende des Wellschlauches 2 mit der auf ihm befindlichen Dichtung 17 auf die konische Innenwandung 8 der Ringnut 7 aufschiebbar, wie dies beispielsweise in den Ausführungsbeispielen gemäß Fig. 19, 22 und 26 der Fall ist, kann der überstehende Dichtungsbereich 17a innerhalb der sich verjüngenden Nut 7 an die beiden Wandungen der Nut 7 anpreßbar und vorzugsweise gleichzeitig auch noch ein- oder ausbeulbar sein, wie dies vor allem Fig. 26 zeigt.

Es wurde schon erwähnt, daß der auf die Außenseite des Wellschlauches 2 greifende Teil der Dichtungshülse 17 wenigstens einen nach innen gerichteten Vorsprung, im Ausführungsbeispiel einen Ringvorsprung 24 zum Eingriff in ein Wellental 3 haben kann. Dies zeigen nicht nur die Figuren 23 bis 25, die zusätzlich den an der Innenseite der Hülse 5 vorstehenden Haltewulst 18 haben, sondern dies ist auch bei weiteren Ausführungsbeispielen z.B. in den Figuren 19 bis 23 und auch im Ausführungsbeispiel nach Fig. 26 vorgesehen, wobei entweder ein solcher Ringvorsprung 24 (Fig. 19 bis 22 und 26) oder zwei solche Ringvorsprünge 24 Verwendung finden können.

Während bei den Ausführungsbeispielen gemäß den Figuren 23 bis 25 die innenseitigen Wülste 18 für die axiale Festlegung des Wellschlauches 2 und geleichzeitig auch zur Abdichtung dienen, ist in den übrigen Ausführungsbeispielen zum Festlegen des Wellschlauches 2 in der Hülse 5 eine mit einem nach innen gerichteten, in ein Wellental 3 des Wellschlauches 2 eingreifenden Vorsprung 25 versehene Federzunge 26 oder dergleichen lösbares Kupplungselement vorgesehen. Es könnte aber auch ein stekbares oder nicht selbst einfederndes, sondern eindrückbares Kupplungselement vorgesehen sein.

Im Falle der Verwendung einer Zunge 26 kann es günstig sein, wenn der Innenstutzen 9 in oder über den Bereich des oder der ein solches Kupplungselement bzw. die Zunge 26 begrenzenden Schlitze 27 ragt. Wird bei der Montage für eine tiefliegende Anordnung dieser Schlitze 27 gesorgt, kann nämlich dann das von dem Innenstutzen 9 gegebenenfalls abtropfende Wasser gleich durch diese Schlitze 27 austreten.

Insgesamt ergibt sich eine Armatur 1, bei welcher je nach Anforderungen an die Dichtigkeit schon der Wellschlauch 2 mit einem Innenstutzen zusammen eine gewisse Abdichtung ergeben kann, ohne besondere Umbaumaßnahmen aber auch zusätzliche Dichtungen 20 und/oder 17 oder auch 20a vorgesehen sein können. Eine solche Dichtung 20a zeigt Fig. 11 bis 14, wobei diese in ein Wellental 3 passende Dichtung entweder eine an das Querschnittsprofil des Wellentales 3 angepasste Spezialdichtung ohne oder mit Dichtlippen 20b oder auch ein O-Ring gemäß Fig. 13 sein kann, dessen Innendurchmesser größer als der Außendurchmesser des Wellentales ist, dessen Außendurchmesser aber den Außendurchmesser des Schlauches 2 übertrifft, oder es kann sogar eine Flachdichtung gemäß Fig. 14 vorgesehen sein, die sich beim Einschieben mit ihrem über den Außendurchmesser des Wellrohres überstehenden Teil an die Innenwandung der Hülse und dabei evtl. vor allem einen schrägen Übergang 22 anschmiegt.

In all diesen Fällen ist dafür gesorgt, daß die unregelmäßige Schnittlinie eines Teilstückes 13 eines Wellentales an der in Einschubrichtung vorderen Stirnseite des Wellschlauches 2 nicht zu Undichtigkeiten führen kann.

Die Anschlußarmatur 1 für umfangsgerippte Rohre oder Schläuche 2, insbesondere für flexible Wellschläuche 2 hat eine das Ende des Wellschlauches 2 in sich aufnehmende Hülse 5, mit welcher der Wellschlauch 2 in Gebrauchsstellung kuppelbar und verbindbar ist. Im Inneren der Hülse 5 ist ein Anschlag 6 mit einer ringförmig umlaufenden Nut 7 vorgesehen, deren der Hülsenachse A zugewandte Innenwandung 8 gleichzeitig die Außenwand eines Innenstutzens 9 ist. Dessen Stirnseite 10 ist außerdem von einer Innenwand 11 begrenzt, weist gegen das Einsteckende 12 der Hülse 5 hin und hat von diesem Einsteckende 12 einen im Hülseninneren befindlichen Abstand, so daß also der Wellschlauch 2 zunächst über einen Teil der Hülsenlänge unbehindert eingeschoben werden kann. Form und Größe der ring- oder kreisförmigen Stirnseite 10 - eine Kreisform ergibt sich, wenn an der Stirnseite 10 beiseits oder einseits Anfasungen oder Abrundungen vorgesehen sind - des Innenstutzens 9 weichen dabei von der der ringförmigen Wandung des Wellschlauches 2 und insbesondere einem Wellental 3 derart ab, daß zumindest der vorderste Bereich des Innenstutzens 9 oder seine Stirnseite 10 und ein ringförmiger Wandungsteil 13 eines Wellentales 3 in axialer Richtung ineinandersteckbar oder verschiebbar sind, wobei je nach Durchmesser- und Querschnittsverhältnissen das Wandungsteil 13 in das Innere des Stutzens 9 oder auf dessen Außenseite paßt. Somit kann allein schon durch den Innenstutzen und das Ende des Wellschlauches 2 eine gewisse Dichtigkeit erzielt werden, die aber mit Hilfe von Dichtungen 20, 20a und 17 je nach Anforderungen gesteigert werden kann.

Im Anschluß an die Hülse 5 kann in bekannter Weise ein Schraubstutzen 28 vorgesehen sein.

In den Figuren 27 bis 29, in denen von der Hülse 5 jeweils nur der Bereich des Innenstutzens 9 und der Ringnut 7 sowie der Federzunge 26 ohne Wellschlauch und ohne Dichtung dargestellt ist, ist verdeutlicht, daß die innere Nutenwand 8 und/oder die äußere Nutenwand 15 der Ringnut 7 auch nur bereichsweise schräg verlaufen können.

Fig. 27 ist dabei eine Lösung, bei der zwar die gesamte Aussenwandung 15, aber nur ein Teil der Innenwandung 8 schräg verlaufen, während der der Stirnseite 10 des Innentutzens 9 nahe Bereich etwa zylinderförmig ist.

Umgekehrt ist beim Ausführungsbeispiel nach Fig.28 zwar die gesamte Innenwandung 8 der Ringnut 7 schräg, aber die Außenwandung 15 nur über einen Teil der Tiefe der Ringnut 7 und zwar ist nur der dem Nutengrund 14 nahe Bereich dieser Außenwandung 15 schräg.

Fig. 29 zeigt schließlich eine Lösung, bei der beide Nutenwandungen 8 und 15 nahe dem Boden oder Nutengrund 14 schräg, im übrigen aber zylinderförmig und dabei parallel zueinander verlaufen. Dabei begrenzt die innere Nutenwandung 8 jeweils den Innenstutzen 9, der vorstehend auch als Stützhülse zum Eingriff in das Ende des Wellrohres oder Wellschlauches 2 und als Führung bei der Montage dienen kann.

In Fig. 3 ist angedeutet, daß der größte Außendurchmesser des Innenstutzens 9 im Bereich des Nutengrundes 14 gleich oder kleiner als der Innendurchmesser des Wellschlauches 2 und der kleinste Durchmesser der Außenwandung 15 der Ringnut 7 im Bereich des Nutengrundes 14 vor allem kleiner als der Außendurchmesser des Wellschlauches 2 sind, so daß bei einem weiteren Einschieben des Wellschlauches 2 gegenüber der in Fig.3 dargestellten Position dieser Schlauch 2 zwar innen freibleibt, aber außen an der Wandung 15 aufläuft. Während also bei der in Fig. 3 dargestellten Position der Wellschlauch 2 noch frei drehbar ist, kann er durch weiteres Einschieben, wobei der Vorsprung 25 dann in benachbarte Wellentäler 3 einrasten kann, zur Anlage an der Außenwandung 15 gebracht und dadurch auch abgedichtet und/oder auch in Drehrichtung festgelegt werden kann.

Fig. 4 zeigt demgegenüber eine Anordnung, bei der der kleinste Außendurchmesser des Innenstutzens 9 insbesondere an seiner Stirnseite 10 kleiner - gegebenenfalls gleich - als der Innen durchmesser des Wellschlauches 2 und der Außendurchmesser des Innenstutzens 9 an seinem Ende im Bereich des Nutengrundes 14 größer als der Innendurchmesser des Wellschlauches 2 ist und wobei der kleinste Durchmesser der Außenwandung 15 der Ringnut 7 im Bereich der Endlage des Wellschlauches 2 gleich oder grösser als der Außendurchmesser des Wellschlauches 2 ist. In diesem Falle läuft der Wellschlauch 2 beim Einschieben gemäß Fig.4 mit seinem Innendurchmesser an der Innenwandung 8 der Ringnut 7 auf, während er an der Außenwandung 15 freibleiben kann. Auch dadurch läßt sich eine Abdichtung und gegebenenfalls eine Festlegung erreichen. Fig. 5 deutet eine Lösung an, bei der der größte Durchmesser der Innenwandung 8 der Ringnut 7 gleich oder größer als der Innendurchmesser des Wellschlauches 2 und der kleinste Durchmesser der Außenwandung 15 der Ringnut 7 gleich oder kleiner als der Außendurchmesser des Wellschlauches 2 sind, so daß dieser beim Einschieben in die in Fig.5 dargestellte Position sowohl an der Innenwand 8 als auch an der Außenwand 15 aufläuft und zur Anlage kommt und dadurch eine gute Abdichtung erhält und in dieser dargestellten Position auch gegen Verdrehen weitgehend durch Kraftschluß gesichert ist. Würde der Wellschlauch 2 gegenüber den Positionen, in denen er in Fig.4 und 5 dargestellt ist, zunächst um ein Wellental weniger tief eingeschoben, wäre er in diesen Ausführungsbeispielen jeweils noch drehbar.

Fig. 5 kann auch bedeuten, daß der Wellschlauch durch das Einschieben auf den Innenstutzen 9 etwas gedehnt oder durch das Einschieben gegen die schräge Außenwandung 15 etwas gestaucht und dadurch nun beidseits an den Wandungen der Nut 7 zur Anlage gebracht ist.

Nicht dargestellt ist eine Lösung, bei der der größte Durchmesser der Innenwandung 8 der Ringnut 7 gleich oder kleiner und der kleinste Durchmesser der Außenwandung 15 gleich oder größer als der jeweilige Durchmesser des Wellschlauches 2 sind, so daß dieser selbst bei größtmöglicher Einstecktiefe drehbar bleibt.

Es stehen also für unterschiedliche Forderungen und Anwendungsfälle entsprechende unterschiedliche Möglichkeiten zur Verfügung, wobei die erwähnte Drehbarkeit durch die Form des Vorsprunges 25 und der ihn tragenden Zunge 26 in Umfangsrichtung begünstigt wird. Die beidseits in Richtung zum Nutengrund 14 der Ringnut 7 schräg aufeinanderzulaufenden Wandungen 8 und 15 ermöglichen dabei all die vorerwähnten vorteilhaften Ausgestaltungen mit einer vergleichsweise geringen Baulänge der Armatur 1.

**Ansprüche**

1. Anschlußarmatur (1) für umfangsgerippte Rohre oder Schläuche (2), die als Schlauchprofil quer zu ihrer Achsrichtung angeordnete, umlaufende Nuten (3) bzw. Wellen (4) oder dergleichen haben, wobei die Anschlußarmatur (1) eine das Ende des Wellschlauches oder -rohres (2) in sich aufnehmende Hülse (5) hat, an welcher der Wellschlauch beziehungsweise das Wellrohr (2) in Gebrauchsstellung kuppelbar oder festlegbar ist, wobei im Inneren der Hülse (5) ein Anschlag (6) mit einer ringförmig umlaufenden Nut (7) vorgesehen ist, deren der Hülsenachse (A) zugewandte Innenwandung (8) die Außenwand eines Innenstutzens (9) ist, dessen Stirnseite (10) von einer Innenwand (11) begrenzt ist, gegen das Einsteckende (12) der Hülse (5) gerichtet ist und von diesem einen im Hülseninneren befindlichen Abstand hat, **dadurch gekennzeichnet,** daß wenigstens ein Teil der Innenwandung (8) und wenigstens ein Teil der Aussenwandung (15) der Ringnut (7) in axialer Richtung schräg oder bogenförmig oder abgestuft im Sinne einer Querschnittsverminderung der Ringnut (7) zu ihrem Boden (14) hin geformt sind und daß in Gebrauchsstellung das Ende des Wellschlauches (2) und/oder eine Dichtung (17,20) in die Ringnut (7) eingreift.

2. Armatur nach Anspruch 1, dadurch gekennzeichnet, daß der kleinste Außendurchmesser des Innenstutzens (9), insbesondere an der Stirnseite (10), kleiner oder gleich dem Innendurchmesser des Wellschlauches und der Außendurchmesser des Innenstutzens (9) an seinem Ende im Bereich des Nuten grundes (14) größer als der Innendurchmesser des Wellschlauches (2) ist und daß der kleinste Durchmesser der Auaßenwandung (15) der Ringnut (7) gleich oder größer als der Außendurchmesser des Wellschlauches (2) ist.

3. Armatur nach Anspruch 1 oder 2, dadurch gekennzeichnet, daß der größte Außendurchmesser des Innenstutzens (9) im Bereich des Nutengrundes (14) gleich oder kleiner als der Innendurchmesser des Wellschlauches (2) und der kleinste Durchmesser der Außenwandung (15) der Ringnut (7) im Bereich des Nutengrundes (14) gleich oder kleiner als der Außendurchmesser des Wellschlauches (2) sind.

4. Armatur nach einem der Ansprüche 1 bis 3, dadurch gekennzeichnet, daß der größte Durchmesser der Innenwandung (8) der Nut (7) gleich oder größer als der Innendurchmesser des Wellschlauches (2) und der kleinste Durchmesser der Außenwandung (15) der Ringnut (7) gleich oder kleiner als der Außendurchmesser des Wellschlauches (2) sind.

5. Armatur nach einem der vorstehenden Ansprüche, dadurch gekennzeichnet, daß der größte Durchmesser der Innenwandung (8) der Nut (7) gleich oder kleiner und der kleinste Durchmesser der Außenwandung (15) gleich oder größer als der jeweilige Durchmesser des Wellschlauches (2) sind.

6. Armatur nach einem der Ansprüche 1 bis 5, dadurch gekennzeichnet, daß die Innenwandung (16) der Hülse (5) sich am hinteren Bereich der Schlauchaufnahme, jedoch in Einsteckrichtung vor dem Innenstutzen (9) konisch und/oder stufenförmig verjüngt und vorzugsweise zumindest im Bereich des Nutengrundes (14) im Durchmesser gleich oder kleiner als der Außendurchmesser des Wellschlauches (2) an einer Welle (4) ist.

7. Armatur nach einem der Ansprüche 1 bis 5, dadurch gekennzeichnet, daß die Innenwandung (16) der Anschlußarmatur (1) beziehungsweise ihrer Hülse (5) im Bereich des Innenstutzens (9) gegenüber der Außenwandung (15) der Ringnut (7) in ihrem Umfang über eine Stufe oder stärkere Schräge (22) erweitert ist.

8. Armatur insbesondere nach einem der Ansprüche 1 bis 7, dadurch gekennzeichnet, daß der Innendurchmesser des Innenstutzens (9) gleich oder größer als der der Wellentäler (3) oder Nuten des Wellschlauches (2) ist und die Stirnfläche (10) des Innenstutzens (9) gegen die in Einsteckrichtung vorderste Seitenwand der ersten Welle (4) des Wellschlauches (2) gerichtet ist und daß in der ringförmig an dem Innenstutzen umlaufenden Nut (7) eine durch das Einschieben des Wellschlauches (2) oder -rohres mit Druck beaufschlagbare hülsenförmige Dichtung (20,17a) vorgesehen ist.

9. Armatur insbesondere nach einem der Ansprüche 1 bis 7, dadurch gekennzeichnet, daß der Außendurchmesser des Innenstutzens (9) zumindest in seinem vorderen, dem Einsteckende (12) der Hülse (5) zugewandten Bereich gleich oder kleiner als der Innendurchmesser des Wellschlauches (2) ist und daß in der ringförmig umlaufenden Nut (7) ein durch das Einschieben und Festlegen des Wellschlauches (2) oder -rohres mit Druck beaufschlagbare hülsenförmige Dichtung (20, 17a) vorgesehen ist.

10. Armatur nach Anspruch 8 oder 9, dadurch gekennzeichnet, daß der in der Ringnut (7) befindliche Dichtungsteil durch den Einschiebedruck stauchbar oder teilweise radial ein-und/oder ausbeulbar und an eine oder beide Nutenwandungen (8, 15) andrückbar ist.

11. Armatur nach einem der Ansprüche 1 bis 10, dadurch gekennzeichnet, daß die axiale Erstreckung der hülsenförmigen Dichtung (20) gleich oder kürzer als die Tiefe der Ringnut (7) ist.

12. Armatur nach einem der Ansprüche 1 bis 11, dadurch gekennzeichnet, daß am Ende des Wellrohres oder -schlauches (2) eine dessen Außenseite umgreifende und insbesondere mit radialem Druck beaufschlagende Hülse (17) aus Dichtungswerkstoff vorgesehen ist, die sich in Gebrauchsstellung unter Druck gegen die vorzugsweise erweiterte Innenwandung (16) der Hülse (5) und/oder die Begrenzungsfläche der Ringnut (7) anpreßt und sich vorzugsweise in Gebrauchsstellung unter Druck gegen eine gegebenenfalls in der Ringnut (7) befindliche Dichtung (20) anlegt oder einstückig in diese (17a) übergeht.

13. Armatur nach einem der Ansprüche 1 bis 12, dadurch gekennzeichnet, daß die das Ende des Wellschlauches (2) umgreifende Dichtungshülse (17) wenigstens einen nach innen gerichteten Vorsprung oder Ringvorsprung (24) zum formschlüssigen Eingreifen in ein Wellental (3) des Wellschlauches (2) hat.

14. Armatur nach einem der Ansprüche 1 bis 13, dadurch gekennzeichnet, daß zum Festlegen des Wellschlauches (2) oder -rohres in der Hülse (5) eine mit einem nach innen gerichteten, in ein Wellental (3) des Schlauches (2) eingreifenden Vorsprung (25) versehene Federzunge (26) oder dergleichen insbesondere lösbares Kupplungselement vorgesehen ist.

15. Armatur nach einem der Ansprüche 1 bis 14, dadurch gekennzeichnet, daß der Innenstutzen (9) in oder über den 80 Bereich des oder der das Kupplungselement für den Schlauch (2) vorzugsweise die Zunge (26) begrenzenden Schlitze (27) ragt.

Fig.1

EP 0 381 981 A1

E 90 104 MR    Hummel

Fig. 2

EP 0 381 981 A1

E 90 104 MR

Hummel

Fig. 3

Fig. 4

Fig. 5

Fig. 6

Fig. 7

Fig. 8

Fig. 9

Fig. 10

Fig. 11

Fig. 12

Fig. 13

Fig. 14

EP 0 381 981 A1

Fig.15

Fig.16

Fig.17

Fig.18

Fig. 19

Fig. 20

Fig. 21

Fig. 22

EP 0 381 981 A1

Fig. 23

Fig. 24

Fig. 25

Fig. 26

Fig.27

Fig.28

Fig.29

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 114 455 (PARKIN) <br> * Fig. * <br> --- | 1,2 | F 16 L 25/00 <br> F 16 L 37/08 |
| A | US-A-4 747 621 (GANS) <br> * Fig. * <br> --- | 1,6 | |
| A,D | EP-A-0 086 900 (GROSSAUER) <br> * Fig. * <br> ----- | 1,6,8,9 ,14 | |

**RECHERCHIERTE SACHGEBIETE (Int. Cl.5)**

F 16 L
H 02 G

Der vorliegende Recherchenbericht wurde für alle Patentansprüche erstellt

| Recherchenort | Abschlußdatum der Recherche | Prüfer |
|---|---|---|
| DEN HAAG | 09-05-1990 | HUBEAU M.G. |

EPO FORM 1503 03.82 (P0403)